Europäisches Patentamt

European Patent Office

Office européen des brevets

(19)

(11) Numéro de publication: **0 100 802**
**A1**

## (12) DEMANDE DE BREVET EUROPEEN

(21) Numéro de dépôt: **82401496.3**

(22) Date de dépôt: **06.08.82**

(51) Int. Cl.³: **H 01 R 4/70**

(43) Date de publication de la demande:
**22.02.84 Bulletin 84/8**

(84) Etats contractants désignés:
**AT BE CH DE FR GB IT LI LU NL SE**

(71) Demandeur: **C.T.M.**
**28 rue Broca**
**F-75005 Paris(FR)**

(72) Inventeur: **Nozick, Jacques**
**28, rue Broca**
**F-75005 Paris(FR)**

(74) Mandataire: **Pinguet, André**
**CAPRI 28 bis, avenue Mozart**
**F-75016 Paris(FR)**

(54) **Dispositif de protection pour contact.**

(57) Le capuchon (15) comporte des entailles (22,23) dans lesquelles on peut engager un fil (11) pour le mettre en place sur un contact auto-dénudant. Le capuchon peut être enlevé après mise en place sans enlever le fil. Le fil est positionné par butée contre le fond (15) du capuchon; il n'y a pas à le couper après la pose. Le capuchon peut comporter des éléments de connexion ou de dérivation.

Fig. 2

EP 0 100 802 A1

Croydon Printing Company Ltd

Dispositif de protection pour contact

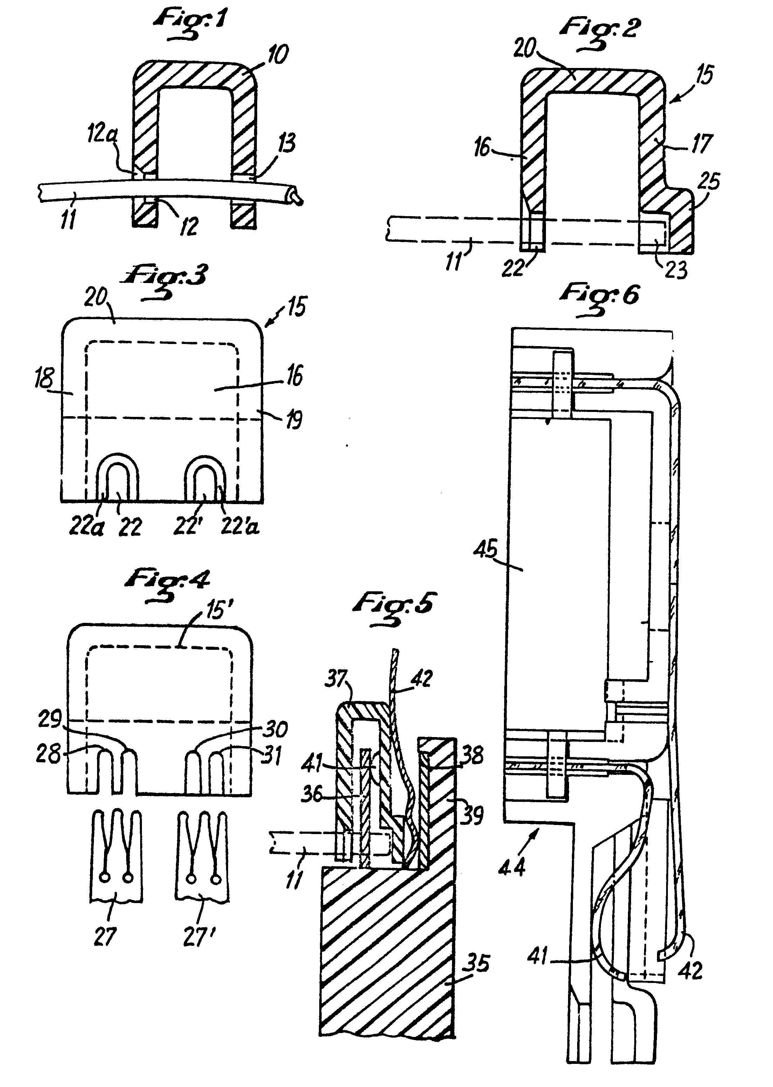

La présente invention a pour objet un dispositif de protection pour contact. On sait que, dans certaines conditions, les contacts peuvent souffrir des agressions de l'atmosphère ambiante, et il est alors prévu de les garnir d'un capuchon de protection, qui peut en outre servir à la mise en place des fils dans le cas des contacts auto-dénudants. La figure 1 des dessins annexés représente en coupe un tel capuchon 10. Il comporte pour chaque fil 11 deux trous alignés 12, 13 dans lesquels on engage le fil, le trou d'entrée 12 comportant un chanfrein d'engagement 12a pour faciliter par guidage la mise en place du fil. En général, un tel capuchon est prévu pour deux fils formant une paire. Les ccntacts auto-dénudants sont bien connus. A titre d'exemple un tel contact est décrit dans le B US 3 145 261 délivré le 18 aout 1964 au nom de AMP.

L'emploi d'un tel capuchon est limité. S'il est assez commode pour mettre en place les fils à brancher, il ne permet pas de modifications sans débrancher les fils qui ont été mis en place. La présente invention a pour objet un capuchon permettant une utilisation plus souple, avec de grandes possibilités d'adaptations multiples.

Conformément à la présente invention, un dispositif de protection pour contact du type auto-dénudant, comportant au moins deux lamelles coplanaires formant entre elles une fente dans laquelle on peut engager un fil conducteur garni de son isolant, ledit dispositif comportant deux parois isolantes parallèles, est remarquable notamment en ce que les deux parois comportent chacune sur un bord homologue, au moins une entaille ou une découpure ouverte, les deux entailles des deux parois parallèles étant en regard l'une de l'autre, l'entaille d'une des parois étant masquée vers l'extérieur par un pan de façon à former dans la paroi correspondante une niche ouverte entre les deux parois.

Un tel dispositif forme un capuchon de protection et recouvre en général deux contacts correspondant à une paire. Ce capuchon peut servir d'outil pour mettre les fils en place : on peut les mettre successivement puisque, grâce à sa configuration, ce capuchon peut être enlevé puis replacé. On peut à tout moment l'enlever pour le remplacer par un autre capuchon pouvant comporter, selon une autre caractéristique de la présente invention, un composant qui peut être une barrette de court-circuit, une résistance, un parafoudre, le capuchon pouvant comporter un ou plusieurs contacts pour coopérer soit avec le contact auto-dénudant, soit avec un contact extérieur quelconque.

D'autres caractéristiques de l'invention apparaîtront au cours de la description qui va suivre, donnée à titre d'exemple non limitatif, en regard des dessins ci-joints, et qui fera bien comprendre comment l'invention peut être réalisée.

Sur les dessins,
- la figure 1 est une vue en coupe d'avant en arrière d'un capuchon classique pour contact du type auto-dénudant ;
- la figure 2 est une vue en coupe d'avant en arrière d'un capuchon selon l'invention ;
- la figure 3 est une vue de face du capuchon de la figure 2 ;
- la figure 4 est une vue analogue à la figure 3 pour une variante ;
- la figure 5 représente en coupe un bloc de contact avec un capuchon selon une autre variante ;
- la figure 6 est une vue en coupe d'un capuchon selon une autre variante de l'invention ; et,
- les figures 7 et 8 sont des vues en coupe de blocs de contact selon l'invention.

Le capuchon 15 des figures 2 et 3 comporte une paroi avant 16 et une paroi arrière 17, réunies par deux parois latérales 18, 19 et un dessus 20. Le capuchon est prévu pour recevoir deux fils de transmission et est formé à cet effet avec deux entailles ou découpures 22, 22' dans la paroi avant 16 et deux entailles 23, 23' dans la paroi arrière 17. Les entailles 22 comportent un chanfrein d'entrée 22a, 22'a. Les entailles 23 sont masquées par un pan de cloison formant un fond 25, disposé à l'extérieur de la cloison 17, l'entaille 23 formant ainsi une niche débouchant à l'intérieur du capuchon. On peut ainsi placer un conducteur 11 (figure 2), en butée contre le fond 25, et se servir du capuchon 15 comme d'un outil pour mettre en place le conducteur sur un contact auto-dénudant. Une fois le conducteur 11 mis en place, on peut retirer aussitôt le capuchon et s'en servir pour mettre en place un second conducteur. On peut, si on le préfère, mettre en place deux conducteurs simultanément dans la même opération, bien qu'il puisse paraître plus simple d'opérer en deux temps. Le capuchon peut être laissé en place sur le contact si une protection paraît nécessaire.

Dans la forme de réalisation représentée sur les figures 2 et 3, le capuchon 15 comporte une entaille pour chaque contact. Si l'on utilise des contacts 27, 27' à deux fentes, comme représenté schématiquement sur la figure 4, on peut prévoir quatre entailles 28, 29, 30, 31 sur le capuchon, afin de pouvoir placer deux fils sur chaque contact, un premier fil de branchement et un second fil de dérivation.

La figure 5, qui est une vue en coupe par un plan perpendiculaire à la lame d'un contact, illustre une application du dispositif de capuchon de protection selon la présente invention.

Sur une base 35 en matière isolante, sont montés en ligne de façon connue en soi des contacts auto-dénudants 36. Le capuchon 37 selon l'invention est prévu pour coopérer avec une base de contacts modifiée selon une autre caractéristique de la présente invention. Dans un plan parallèle à celui des contacts 36, la base porte une lame 38, qui peut être appuyée contre une nervure 39 faisant corps avec la base 35. A l'aide du capuchon 37, on peut engager un fil 11 dans un contact 36, comme représenté sur la figure 5. Le capuchon 37 peut comporter une barrette intérieure 41, fixée de toute manière appropriée sur l'une ou l'autre face interne du capuchon. Cette barrette peut s'étendre sur la longueur de deux contacts (ou davantage) permettant ainsi de les mettre en court-circuit. Elle peut ne s'étendre que sur la largeur d'un contact, formant ainsi une prise de dérivation. En outre, le capuchon peut comporter une lame de contact extérieure 42, fixée de toute façon appropriée au capuchon, prévue pour venir en contact avec la lame 38, qui peut par exemple être connectée à la masse. La lame 42 peut correspondre à un seul, ou à plusieurs contacts 36. Entre la lame 42 et la barrette 41, peut être connecté tout composant désiré, tel que par exemple une résistance, un parafoudre, ou même une liaison directe, permettant le bouclage à la terre directement de la ligne concernée.

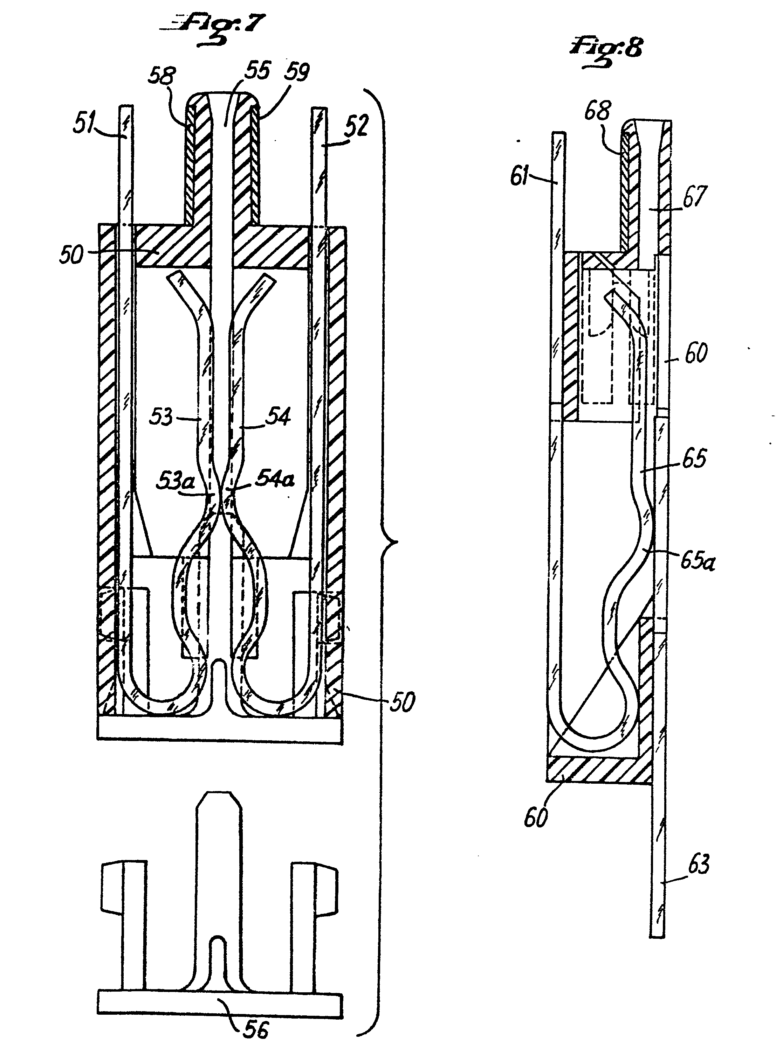

Dans cet esprit, la figure 6 représente en coupe schématique un capuchon 44 selon l'invention comportant un parafoudre 45 interposé entre un contact intérieur 41 prévu pour venir s'appliquer contre la partie supérieure d'un contact auto-dénudant, et un contact extérieur 42, prévu pour venir s'appliquer contre la lame 38 de mise à la terre d'une base de contacts.

La présente invention peut être appliquée avantageusement sur les matériels de communication tels que les réglettes et têtes de câbles, les blocs de distribution, les armoires de sous répartition et analogues.

Les figures 7 et 8, qui sont des vues dans des plans perpendiculaires aux lames des contacts auto-dénudants, représentent schématique- des blocs de distribution.

Le bloc de la figure 7 comporte une base 50 en matière isolante, munie de deux contacts auto-dénudants 51, 52 prolongés par des parties souples 53, 54 et d'un puits 55 pour l'introduction d'une broche. Un couvercle 56 permet, par son introduction, l'écartement des contacts 53, 54. Parallèlement aux contacts auto-dénudants, sont disposées deux barres de masse 58, 59 correspondant à la lame 38 du dispositif de la figure 5. On remarquera que les points de contact 53a, 54a sont disposés de façon à pouvoir être écartés par une broche, sans que celle-ci vienne au niveau de ces points de contact et par conséquent, les surfaces des contacts 53a, 54a ne seront pas abimées par les broches.

La figure 8 représente une variante dans laquelle un bloc 60 porte deux séries de contacts 61, 63, le contact 61 étant prolongé par une partie souple 65. Le bloc 60 comporte également un puits 67 et une barre de masse 68. Comme sur la figure 7, le contact 65a peut être écarté sans risquer d'être détérioré par une broche d'écartement.

On peut adapter à ces deux derniers blocs de contact n'importe lequel des capuchons décrits en regard des figures 1 à 6. On peut mettre les fils en place un par un, le capuchon pouvant être enlevé sans enlever le ou les fils déjà mis en place. On peut adjoindre après coup un capuchon à un montage, si cela devient utile. Le capuchon peut n'être utilisé que pour la mise en place des fils, car étant ouvert vers le bas il peut être enlevé après l'opération de mise en place. Il n'y a pas de fil à engager dans un trou : le fil est placé par le dessous en butée contre le pan de cloison, et l'on enfonce le fil dans la fente de contact. On rentre le fil à la main ; il n'y a pas lieu de couper le fil après engagement dans le capuchon ou après mise en place dans le contact auto-dénudant. Le capuchon sert d'outil, et il n'y a pas besoin d'un autre outil. Il n'y a pas de ligne de fuite, car il n'y a pas moignon de fil sectionné qui émerge par un trou de sortie (voir figure 1).

Revendications

1. Dispositif de protection pour contact du type auto-dénudant comportant au moins deux lamelles coplanaires formant entre elles une fente dans laquelle on peut engager un fil conducteur garni de son isolant, ledit dispositif comportant deux parois isolantes parallèles (16, 17) et étant caractérisé en ce que les deux parois (16,17) comportent chacune sur un bord homologue au moins une entaille (22, 23) ou une découpure ouverte, les deux entailles (22, 23) des deux parois parallèles (16, 17) étant en regard l'une de l'autre, l'entaille (23) d'une des parois (17) étant masquée vers l'extérieur par un pan (25) de façon à former dans la paroi correspondante une niche (23) ouverte entre les deux parois.

2. Dispositif selon la revendication 1, caractérisé en ce que lesdites deux parois (16, 17) sont assemblées l'une à l'autre de façon à former un capuchon (15), comportant deux séries de deux entailles alignées.

3. Dispositif selon la revendication 2, caractérisé en ce qu'il comporte au moins un élément métallique (41, 42) prévu pour venir en contact avec les contacts auto-dénudants ou avec des contacts extérieurs au capuchon.

4. Dispositif selon la revendication 3, caractérisé en ce qu'il comporte au moins un élément métallique interne (41) prévu pour venir en contact avec un contact auto-dénudant et au moins un élément métallique externe (42) prévu pour venir en contact avec un contact extérieur (38, 58, 59, 68), une liaison pouvant comporter une jonction directe, un composant tel qu'une résistance ou un parafoudre étant établi entre l'élément métallique interne (41) et l'élément métallique externe (42).

**0100802**

5. Bloc de contacts prévu pour coopérer avec un capuchon selon une des revendications précédentes, caractérisé en ce qu'il comporte une lame métallique (38, 58, 59, 68) disposée parallèlement à une rangée de contacts (36, 51, 52, 61) et au voisinage et au niveau de cette rangée.

6. Bloc de contacts selon la revendication 5, caractérisé en ce que les lames de contact (53, 54, 65) comportent chacune une zone (53a, 54a, 65a) pour le contact électrique, et une zone distincte pour recevoir une broche d'écartement des contacts.

0100802

*Fig:1*

*Fig:2*

*Fig:3*

*Fig:6*

*Fig:4*

*Fig:5*

0100802

Fig.7

Fig.8

**Office européen des brevets**

**RAPPORT DE RECHERCHE EUROPEENNE**

**0100802**
Numéro de la demande

EP  82 40 1496

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | FR-A-2 373 172  (THOMAS & BETTS) *Page 3, ligne 33 - page 4, ligne 4; figure 1* | 1 | H 01 R    4/70 |
| Y | US-A-4 186 984  (AMP) *Résumé; figures* | 1 | |
| Y | FR-A-2 365 896  (AMP) *Page 6, ligne 14 - page 7, ligne 4; figures* | 1 | |
| A | FR-A-2 367 358  (ILLINOIS) *Figures* | 1 | |
| A | GB-A-2 070 867  (W.QUANTE) *Résumé; figures* | 5 | **DOMAINES TECHNIQUES RECHERCHES (Int Cl. ³)** |
| A | FR-A-2 023 857  (AMP) *Figures 3,4* | 6 | H 01 R    4 |
| | | | H 01 R    43 |
| | | | H 04 Q    1 |

Le présent rapport de recherche a été établi pour toutes les revendications

| Lieu de la recherche | Date d'achèvement de la recherche | Examinateur |
|---|---|---|
| LA HAYE | 29-04-1983 | RAMBOER P. |